(19) Europäisches Patentamt

European Patent Office

Office européen des brevets

(11) Numéro de publication : **0 289 383 B1**

(12) **FASCICULE DE BREVET EUROPEEN**

(45) Date de publication du fascicule du brevet :
07.08.91 Bulletin 91/32

(21) Numéro de dépôt : 88400847.5

(22) Date de dépôt : 08.04.88

(51) Int. Cl.⁵ : **G10K 11/04**

(54) **Filtre acoustique permettant de supprimer ou d'atténuer les alternances négatives d'une onde élastique et générateur d'ondes élastiques comportant un tel filtre.**

(30) Priorité : 28.04.87 FR 8705981

(43) Date de publication de la demande :
02.11.88 Bulletin 88/44

(45) Mention de la délivrance du brevet :
07.08.91 Bulletin 91/32

(84) Etats contractants désignés :
AT BE CH DE GB IT LI NL SE

(56) Documents cités :
FR-A- 2 556 582
FR-A- 2 571 635

(73) Titulaire : **EDAP INTERNATIONAL**
**Z.I. le Parc aux Vignes Rue des Vieilles Vignes**
**F-77200 Croissy Beaubourg (FR)**

(72) Inventeur : **Dory, Jacques**
**91, rue des Molveaux**
**F-77450 Coupvray (FR)**

(74) Mandataire : **Marquer, Francis et al**
**Cabinet Moutard 35, Avenue Victor Hugo**
**F-78960 Voisins le Bretonneux (FR)**

## Description

Lorsqu'une onde élastique de grande intensité engendrée par un radiateur ultrasonore de puissance focalisant, telle que celle utilisée, par exemple, en lithotripsie extra-corporelle, se propage en milieu liquide, les alternances "négatives" de l'onde (c'est-à-dire correspondant à des pressions inférieures à la pression statique moyenne) peuvent, dans la région focale, engendrer des phénomènes de cavitation, avec création de microbulles gazeuses, lesquelles entravent la propagation de l'onde et peuvent avoir également des effets indésirables sur les tissus biologiques traversés.

Lorsque l'onde a la forme d'un train d'onde très bref, ce phénomène se traduit par une atténuation considérable de l'onde qui suit la première alternance négative, et seule est pratiquement transmise alors la première alternance positive, laquelle n'est pas, en général, la plus importante, d'où une perte d'efficacité.

Il est cependant possible de travailler avec des impulsions présentant des alternances négatives, sachant que seule la première alternance positive sera exploitable, et en acceptant la perte de rendement qui en résulte. Cette solution permet d'utiliser des générateurs simplifiés.

Mais, dans ce cas, des perturbations supplémentaires importantes peuvent apparaître, pour certaines conditions de travail, se superposant à celles déjà mentionnées et réduire encore davantage l'efficacité du générateur.

Ces perturbations sont dues à l'accumulation des bulles de cavitation pouvant se produire lorsque l'on travaille à cadence élevée, dans un volume confiné. Les bulles de cavitation, qui ne peuvent s'éliminer assez vite, forment un véritable matelas, qui bloque très rapidement la totalité de l'onde acoustique. Ces conditions sont réunies lorsque l'on tire sur un calcul, en général situé et enclavé dans un volume de très faible dimension. On constate alors qu'une augmentation de la cadence de tir ne réduit pas la durée du traitement, comme cela serait logique, mais réduit au contraire son efficacité. Il n'est alors pas possible d'exploiter les possibilités de tir à cadence élevée qu'offrent les lithotripteurs extra-corporels actuels.

L'invention a pour objet un dispositif qui supprime cet inconvénient et permet de tirer à cadence élevée sans perte d'efficacité, ce qui doit conduire à des durées de traitement extrêmement réduites.

Le document FR-A-2571635 divulgue un dispositif permettant de supprimer les impulsions acoustiques négatives, comprenant une diode acoustique constituée par au moins deux feuilles disposées l'une contre l'autre, entre lesquelles un liquide peut être contenu.

Toutefois, le mode de réalisation préféré consiste à créer un vide entre les feuilles, et l'utilisation possible des propriétés de cavitation d'un liquide entre lesdites couches, lesquelles sont ordinairement considérées comme nuisibles pour l'homme de l'art, pour améliorer le fonctionnement de la diode acoustique n'est pas mentionnée.

Le Demandeur a constaté, lors d'expériences effectuées "in vitro" dans des cuves de grande dimension, qu'il était possible, dans certaines conditions expérimentales, d'augmenter la cadence de tir jusqu'aux environs de 100 Hz, avant que n'apparaisse une baisse sensible d'efficacité. Ceci a permis dans ces conditions de fragmenter des calculs en une minute, alors que la même opération, pratiquée "in vivo", et à la cadence plus réduite tolérable par le patient, peut dépasser quarante-cinq minutes.

Le Demandeur a interprété ce fait en considérant que l'une de ces causes est que, dans un milieu non confiné, les bulles de cavitation s'évacuent beaucoup plus facilement que dans un milieu confiné, et disparaissent ainsi entre deux tirs successifs.

Il a constaté qu'après avoir traversé la zone focale, l'onde, dans l'hypothèse où elle n'a pas été absorbée par un calcul, ne présente plus qu'une seule alternance positive. Le Demandeur explique ce fait en considérant que l'énergie des ondes négatives a été absorbée par la formation des bulles de vapeur.

Il en conclut que, dans ces conditions expérimentales particulières, non réalisables "in vivo", les bulles de vapeur qui se forment au passage de l'onde ne subsistent que pendant un temps très court, de l'ordre de 1/100 de seconde.

Partant de cette découverte, l'invention vise à donner naissance à un tel type d'onde pour des pressions sensiblement inférieures à celle qui règne au niveau du foyer, de préférence en amont de ce dernier, dans une zone située à l'extérieur du patient, où l'énergie n'est pas encore très concentrée, et elle consiste à utiliser à cet effet un filtre acoustique à caractéristique de transmission non linéaire en amplitude en fonction de la pression de l'onde.

Suivant une particularité de l'invention, un tel filtre sera très simplement réalisé en utilisant un liquide de transmission des ultrasons dont la tension de vapeur est très voisine de la pression atmosphérique, et dans lequel, par conséquent, la cavitation peut apparaître pour des pressions ultrasonores relativement faibles. On sait en effet que la cavitation peut prendre naissance lorsque la pression instantanée "négative" devient, en valeur absolue, égale ou supérieure à la différence entre la pression de vapeur et la pression statique moyenne, proche ici de la pression atmosphérique.

Dans une forme d'exécution préférée, un tel filtre est réalisé en faisant circuler le liquide de transmission à faible tension de vapeur entre deux lames parallèles en matériau transparent aux ondes élastiques, par exemple une matière plastique, telle que le polyméthylpentène.

Pour éviter l'accumulation des bulles de cavitation dans l'espace entre les lames, une circulation rapide du liquide est prévue, de façon que les bulles soient rapidement évacuées à mesure de leur formation.

Dans un tel dispositif, la tension de vapeur du liquide de transmission est un paramètre critique. Ce paramètre variant avec la température, il est prévu, suivant une particularité de l'invention, de mesurer et de réguler cette dernière. Le contrôle de la température offre le grand avantage de permettre d'ajuster la tension de vapeur à une valeur optimale, et d'avoir un filtrage très efficace et très stable.

Le passage dans le filtre peut aussi avoir une action favorable sur la forme de l'onde produite. En effet, la vitesse du son dans un liquide varie en fonction de la pression et augmente avec cette dernière, ce phénomène dépendant aussi de la température. Il en résulte que, lorsqu'une onde d'une amplitude importante traverse un milieu liquide, les fronts positifs ont tendance à se raidir, puisque les crêtes positives ont tendance à rattraper le début de l'impulsion. Le phénomène inverse se produit pour les fronts négatifs, qui ont tendance à s'étaler.

En utilisant un filtre acoustique relativement épais, il sera donc possible, en contrôlant la température, de contrôler la forme du signal et de l'optimiser.

Suivant une autre particularité de l'invention, deux filtres seront disposés en cascade : le premier, relativement épais, sert à améliorer la forme du signal en exploitant la non linéarité en vitesse mentionnée ci-dessus ; le deuxième, plus mince, exploite la non linéarité en amplitude liée à la cavitation pour éliminer les composantes négatives.

L'invention sera mieux comprise à la lumière de la description ci-après.

Au dessin annexé :

La figure 1 représente schématiquement un filtre acoustique non linéaire en amplitude conforme à un mode d'exécution préféré de l'invention, dont

La figure 2 représente, vue en plan, la cavité dans laquelle circule le liquide ;

La figure 3 représente schématiquement un radiateur ultrasonore de puissance équipé d'un tel filtre et d'un filtre non linéaire en vitesse ; et

La figure 4 illustre les formes d'ondes à l'entrée et à la sortie des deux filtres.

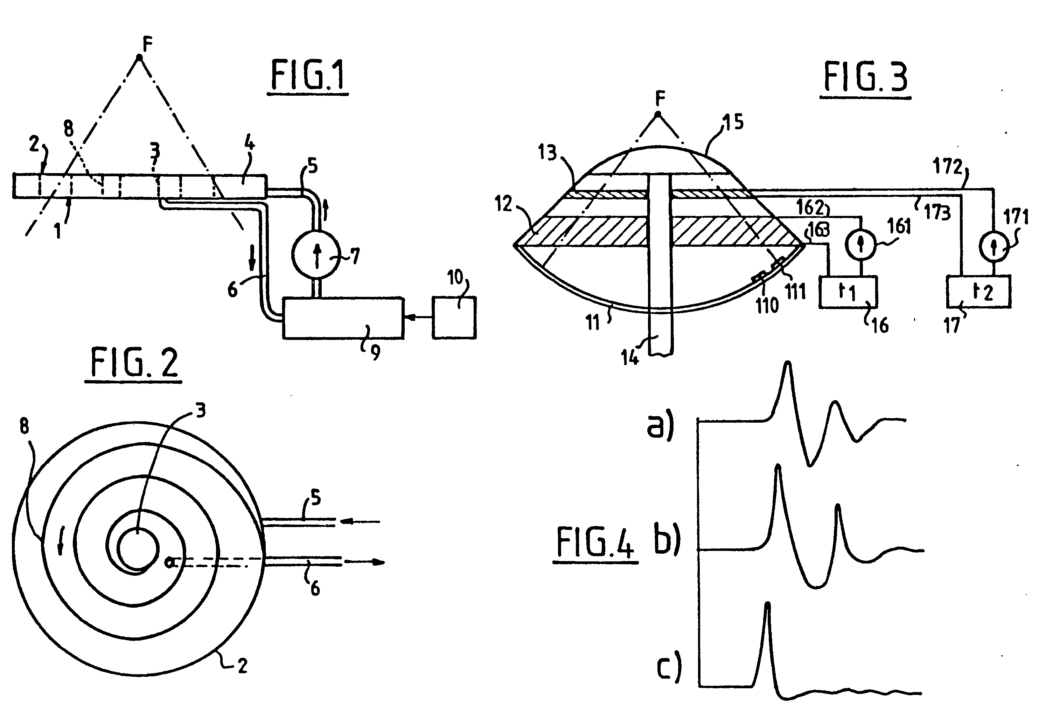

Aux figures 1 et 2, on a représenté un filtre non linéaire en amplitude destiné à être utilisé avec un lithotripteur extra-corporel du type décrit dans le brevet français No 8320041, déposé le 14 Décembre 1983, au nom du Déposant, pour : "Appareil à impulsions ultrasonores destiné à la destruction des calculs".

Ce filtre est constitué par une cavité annulaire formée dans un disque fermé par deux plaques 1 et 2 de matière plastique transparente aux ondes élastiques.

Un orifice circulaire 3 est ménagé au centre du disque pour le passage d'une sonde de repérage échographique, non représentée sur le dessin. Le filtre est traversé par le faisceau d'ondes élastiques, focalisé en F, engendré par un radiateur non figuré. Un liquide à faible tension de vapeur 4 qui sera, à titre d'exemple, un fréon ayant un point d'ébullition compris entre 40 et 45°C, est introduit dans la cavité par une canalisation 5 et en ressort par une canalisation 6, sa circulation étant assurée par une pompe 7. La vitesse de circulation est par exemple comprise entre 10 cm et 1 m/s.

Une cloison 8 en forme de spirale est montée à l'intérieur de la cavité annulaire afin d'assurer une répartition homogène de la circulation du liquide et ainsi, l'élimination immédiate de toute bulle gazeuse. Cette disposition est donnée à titre d'exemple, et d'autres formes peuvent être envisagées pour la cloison ; il est possible aussi de prévoir plusieurs entrées et sorties de liquide, ou encore des entrées et sorties de forme annulaire, afin d'évacuer plus rapidement les bulles parasites.

L'épaisseur du disque n'est pas critique. Elle peut être, à titre d'exemple, égale à 1 cm. Une faible épaisseur facilite la mise en circulation rapide du liquide.

Sur son trajet de circulation, le liquide traverse un récipient 9, équipé d'un dispositif de régulation en température commandé par un circuit de réglage 10 qui permet de maintenir la température à une valeur déterminée, pour obtenir la tension de vapeur désirée. A titre d'exemple, la température sera régulée à une valeur comprise entre 25 et 40°C.

Dans ces conditions, chaque impulsion acoustique ayant des alternances négatives provoque une cavitation qui absorbe l'énergie desdites alternances. La microbulle ainsi engendrée est éliminée par la circulation du liquide avant l'arrivée de l'impulsion suivante et ne gêne donc pas la transmission des alternances positives de celle-ci.

La figure 3 représente une tête de traitement utilisée en lithotripsie. Celle-ci est constituée par une coupelle sphérique 11 tapissée d'éléments transducteurs piézo-électriques de la manière décrite dans le brevet français susvisé. On n'a représenté, pour simplifier le dessin, que deux éléments 110, 111. Deux filtres 12 et 13 sont interposés sur le trajet du faisceau d'ondes élastiques engendré par les éléments transducteurs, lorsqu'ils sont excités par exemple de la manière décrite dans ledit brevet, et focalisé en F. Le filtre 12 est non linéaire en vitesse et son épaisseur est de l'ordre de 5 cm. Le filtre 13 est non linéaire en amplitude et son épaisseur est de l'ordre de 1 cm. Une sonde de repérage échographique 14 est placée au centre de la coupelle. L'ensemble est placé dans une poche remplie d'eau fermée par une membrane souple 15.

Des bacs thermostatés 16 et 17 permettent de réguler les températures de l'eau de la poche et des liquides contenus dans les deux filtres.

Chacun des deux filtres a la structure représentée aux figures 1 et 2.

Dans le filtre 13, on fait circuler un liquide à faible tension de vapeur à la température $t_2$ de consigne de la régulation, tel un fréon, pour obtenir une non linéarité en amplitude en valeur algébrique, c'est-à-dire une absorption de l'énergie des alternances négatives.

Par contre, dans le filtre 12, on fait circuler un liquide, qui peut être de l'eau, non soumis à cavitation à la température $t_1$ de consigne de la régulation (qui pourra être voisine de la température ambiante). La circulation de ce liquide est simplement destinée à homogénéiser la température, dont dépend l'effet de non linéarité en vitesse.

La circulation du liquide dans le filtre 12 est assurée au moyen d'une pompe 161, 162 étant la canalisation d'entrée du liquide et 163 la canalisation de sortie.

De même, la circulation du liquide dans le filtre 13 est assurée au moyen d'une pompe 171, 172 étant la canalisation d'entrée du liquide et 173 la canalisation de sortie.

Les filtres décrits jouant acoustiquement le rôle de lames à faces parallèles, ils n'introduisent qu'un déplacement négligeable du foyer du dispositif. De toutes façons, la modification du foyer introduite par les filtres pourra être corrigée s'il en est besoin. Les filtres étant en amont de la région focale (dans le mode d'exécution décrit, ils sont plus précisément placés à l'intérieur de la poche 15 qui contient le liquide de couplage), la région focale reste directement utilisable pour le traitement. On pourrait envisager de placer les filtres en aval du foyer F du radiateur, mais il faudrait alors refocaliser le faisceau ultrasonore aval au moyen d'une lentille acoustique.

A la figure 4, on a représenté en (a) la forme d'onde d'une impulsion acoustique engendrée par un transducteur tel que décrit dans le brevet français No 8320041 susvisé ; en (b) la forme d'onde de cette impulsion après passage dans le filtre 12, et en (c) la forme d'onde obtenue après passage dans le filtre 13.

On voit que le passage dans le filtre non linéaire en vitesse a simplement pour effet de raidir les fronts des alternances négatives (ce qu'on appelle un "déferlement" de l'onde), tandis que le passage dans le filtre non linéaire en amplitude supprime pratiquement complètement les alternances négatives.

Il doit être bien compris que le filtre non linéaire en amplitude suivant l'invention peut être associé à n'importe quel type de transducteur ultrasonore de puissance, en vue d'atténuer ou de supprimer les alternances négatives indésirables de l'onde qu'il engendre.

La tension de vapeur saturante du liquide dudit filtre à la température de consigne pourra s'écarter d'autant plus de la pression statique moyenne qui y règne que la puissance des alternances négatives de l'onde qui le traverse sera plus grande, la non linéarité en amplitude étant liée à la formation de cavités remplies de vapeur au sein du liquide.

## Revendications

1. Filtre acoustique comportant une enceinte (1-2) contenant un liquide, caractérisé en ce que la tension de vapeur saturante du liquide est, à la température qui règne dans l'enceinte, suffisamment voisine de la pression statique moyenne qui règne à l'intérieur de celle-ci lorsqu'elle est traversée par l'onde élastique, pour qu'il y ait formation de cavités remplies de vapeur au sein du liquide, afin d'atténuer ou supprimer les alternances négatives de pression de l'onde élastique.

2. Filtre acoustique selon la revendication 1, caractérisé par des moyens (5-6-7) de faire circuler ledit liquide à travers l'enceinte.

3. Filtre acoustique selon la revendication 1 ou 2, caractérisé par des moyens de fixer la température dudit liquide à une valeur prédéterminée fonction de la tension de vapeur saturante requise.

4. Filtre acoustique selon l'une des revendications 1 à 3, caractérisé en ce que l'enceinte constitue une lame à faces parallèles acoustique.

5. Filtre acoustique selon la revendication 4, caractérisé en ce que l'enceinte a la forme d'un disque muni d'une cloison interne hélicoïdale qui définit le trajet de circulation du liquide.

6. Filtre acoustique selon la revendication 1, caractérisé en ce que ladite tension de vapeur saturante est sensiblement égale à la pression atmosphérique.

7. Générateur d'ondes élastiques focalisant ou associé à des moyens de focalisation, caractérisé en ce qu'il comporte un filtre acoustique selon l'une des revendications 1 à 6, interposé sur le trajet du faisceau d'ondes en amont de sa région focale.

8. Générateur selon la revendication 7, caractérisé en ce que ledit filtre est normal à l'axe du faisceau d'ondes de puissance et comporte une ouverture centrale autorisant le passage d'un faisceau auxiliaire d'échographie.

9. Générateur selon la revendication 7, caractérisé en ce qu'il comporte, entre la surface d'émission des ondes de puissance et ledit filtre, un filtre supplémentaire à caractéristique non linéaire de vitesse de transmission des ondes élastiques en fonction de la pression.

10. Générateur selon la revendication 7, caractérisé en ce que les transducteurs élémentaires qui composent sa surface émettrice sont électriquement isolés les uns des autres et ont des fonctions de transfert différentes, et que des moyens de déphasage des signaux élastiques qu'ils émettent sont prévus.

## Patentansprüche

1. Akustikfilter mit einem Raum (1-2), in dem eine Flüssigkeit enthalten ist, dadurch gekennzeichnet, dass die Dampfsättigungsspannung bei der im Raum herrschenden Temperatur dem in diesem Raum, wenn er von der elastischen Welle duchguert wird, herrschenden mittleren statischen Druck nahe genug ist, dass sich in der Flüssigkeit mit Dampf gefüllte Hohlräume bilden, um die negativen Druckhalbwellen einer elastischen Welle zu dämpfen oder zu unterdrücken.

2. Akustikfilter nach Anspruch 1, gekennzeichnet durch Mittel (5-6-7), um diese Flüssigkeit durch den Raum fliessen zu lassen.

3. Akustikfilter nach Anspruch 1 oder 2, gekennzeichnet durch Mittel, um die Temperatur dieser Flüssigkeit auf einen vorbestimmten Wert festzulegen, der von der erforderlichen Dampfsättigungsspannung abhängt.

4. Akustikfilter nach einem der Ansprüche 1 bis 3, dadurch gekennzeichnet, dass der Raum eine akustische Lamelle mit parallelen Flächen bildet.

5. Akustikfilter nach Anspruch 4, dadurch gekennzeichnet, dass der Raum die Form einer Scheibe mit einer inneren spiralförmigen Trennwand hat, die die Strömungsrichtung der Flüssigkeit bestimmt.

6. Akustikfilter nach Anspruch 1, dadurch gekennzeichnet, dass die Dampfsättigungsspannung im wesentlichen gleich dem Atmosphärendruck ist.

7. Fokalisierender oder fokalisierenden Mitteln zugeordneter Generator zur Erzeugung elastischer Wellen, dadurch gekennzeichnet, daß er ein Akustikfilter nach einem der Ansprüche 1 bis 6 aufweist, das auf dem Weg des Wellenbündels stromaufwärts vor seinem Fokalbereich angeordnet ist.

8. Generator nach Anspruch 7, dadurch gekennzeichnet, daß das Filter senkrecht zur Achse des Energiewellenbündels ist und eine zentrale Öffnung aufweist, die den Durchtritt eines Hilfs-Echographiebündels erlaubt.

9. Generator nach Anspruch 7, dadurch gekennzeichnet, daß er zwischen der die Energiewellen aus,sendenden Oberfläche und dem Filter ein zusätzliches Filter nicht-linearer Charakteristik aufweist, mit vom Druck abhängiger Übertragungsgeschwindigkeit der elastischen Wellen.

10. Generator nach Anspruch 7, dadurch gekennzeichnet, daß die elementaren Wandler, die seine Sendeoberfläche bilden, elektrisch voneinander isoliert sind und unterschiedliche Übertragungsfunktionen haben, und daß Mittel zur Phasenverschiebung der von ihnen ausgesandten elastischen Signale vorgesehen sind.

## Claims

1. An acoustic filter, comprising an enclosure (1-2) containing a liquid, characterized in that the saturating vapor tension is, at the temperature which prevails in the enclosure, sufficiently close to the mean static pressure which prevails thereinside when the elastic wave passes therethrough, for vapor filled cavities to be formed within the liquid, so as to attenuate or suppress the negative pressure half-waves of the elastic wave.

2. The acoustic filter as claimed in claim 1, characterized by means (5-6-7) for causing said liquid to flow through the enclosure.

3. The acoustic filter as claimed in claim 1 or 2, characterized by means for fixing the temperature of said liquid at a predetermined value depending on the required saturating vapor tension.

4. The acoustic filter as claimed in one of claims 1 to 3, characterized in that the enclosure forms an acoustic blade with parallel faces.

5. The acoustic filter as claimed in claim 4, characterized in that the enclosure is in the form of a disk with an internal helical dividing wall which defines the flow path of the liquid.

6. The acoustic filter as claimed in claim 1, characterized in that said saturating vapor tension is substantially equal to the atmospheric pressure.

7. An elastic wave generator which is focussing or is associated with focussing means, characterized in that it comprises an acoustic filter as claimed in one of claims 1 to 6, interposed in the path of the wave beam upstream of its focal region.

8. The generator as claimed in claim 7, characterized in that said filter is perpendicular to the axis of the power wave beam and includes a central opening for the passage of an auxiliary echographic beam.

9. The generator as claimed in claim 7, characterized in that it comprises, between the power wave emission surface and said filter, an additional filter with a speed non linear characteristic for transmitting the elastic waves as a function of the pressure.

10. The generator as claimed in claim 7, characterized in that the elementary transducers forming its emitting surface are isolated electrically from each other and have different transfer functions and that means for phase-shifting the elastic signals which they emit are provided.

FIG.1

FIG.3

FIG.2

FIG.4

a)

b)

c)

EP 0 289 383 B1